# EUROPÄISCHE PATENTSCHRIFT

(11) **EP 1 693 190 B1**
(45) Veröffentlichungstag und Bekanntmachung des Hinweises auf die Patenterteilung: **05.04.2017**
(21) Anmeldenummer: 05027555.1
(22) Anmeldetag: 15.12.2005
(51) Int. Cl.: B32B 7/02, F16F 9/30

(54) **Beschichtung zum Entdröhnen von schwingfähigen Bauteilen sowie Verfahren zur Herstellung einer solchen Beschichtung**
Coating for damping vibrating construction parts and method of making such a coating
Revêtement pour atténuer le vrombissement de pièces de construction et méthode d'obtention d'un tel revêtement

(30) Priorität: 18.02.2005 DE 102005007624
(43) Veröffentlichungstag der Anmeldung: 23.08.2006
(73) Patentinhaber: Faist ChemTech GmbH, 67547 Worms (DE)
(72) Erfinder: Hotz, Ernst, 69250 Schönau (DE); Polak, Josef, Dr., 55294 Bodenheim (DE)
(74) Vertreter: Müller Schupfner & Partner Patent- und Rechtsanwaltspartnerschaft mbB

(56) Entgegenhaltungen:
- EP-A- 1 323 523
- WO-A-2005/065939
- DE-A1- 4 324 004

## Beschreibung

Die vorliegende Erfindung betrifft eine Beschichtung zum Entdröhnen von schwingfähigen Bauteilen wie Blechen nach dem Oberbegriff des Patentanspruches 1 sowie ein Verfahren zur Herstellung einer solchen Beschichtung nach Patentanspruch 16.

### Stand der Technik

Solche Beschichtungen zum Entdröhnen von schwingfähigen Bauteilen wie beispielsweise Automobilblechen sind bekannt, wobei zur Körperschalldämpfung dünner Bleche Folien aus viskoseelastischen Stoffen fest mit dem zu dämpfenden Bauteil verbunden werden. Beim Mitschwingen wird die Dämpfungsschicht durch Dehnungsbeanspruchung verformt. Aufgrund unterschiedlicher E-Module (Steifigkeiten der einzelnen Schichten) und Schichtdicken ergibt sich eine komplexe Biegesteifigkeit des Verbundsystems, für das sich ein Gesamtverlustfaktor abhängig von der Frequenz berechnen lässt. Die zu "entdröhnende" Frequenz ist oft die durch eine externe Quelle veranlasste Eigenfrequenz des zu entdröhnenden Bauteils, wobei der Gesamterlustfaktor in erster Linie durch einen hohen Verlustfaktor der Dämpfungsschicht oder ein hohes E-Modul der Dämpfungsschicht verbessert werden kann.

Als auf dem schwingfähigen Bauteil aufzubringende Entdröhnbeschichtungen sind Antidröhnmassen auf Bitumenbasis, Epoxidharzmassen oder Kautschukmassen bekannt. Nach herkömmlicher Verfahrensweise werden solche Mischungen ggf. mit Füllstoffen versehen und zu Folien extrudiert, aus denen dann die entsprechenden Formteile gestanzt oder geschnitten werden. Anschließend werden diese Folien auf die betreffenden Blechteile geklebt, wobei sie ggf. noch unter Erwärmen an die Form des Bleches angepasst werden müssen. Auch spritzbare Massen sind bekannt.

Aus Bitumenfolien bestehende Dämpfungsschichten sind aufgrund ihres geringen Materialpreises günstig für die Anwendung, allerdings sind diese einschichtigen Entdröhnungsbeschläge in ihrem Akustikniveau nur in einem begrenzten Rahmen zu verbessern, auch sind sie spröde und neigen insbesondere bei tieferen Temperaturen zum Abplatzen vom Blech. Sofern Epoxidharzmassen oder andere thermisch oder chemisch härtende Massen als Dämpfungsschicht verwendet werden, treten beim Aushärten dieser Massen auf dem aufzutragenden Blech oft Verformungen des Bleches auf, was insbesondere bei modernen hochglänzenden Oberflächen, wie sie bei heutigen Kraftfahrzeugkarosserien üblich sind, nicht hingenommen wird.

Zur verbesserten Entdröhnung von Blechen ist es bekannt, auf der dem Blechteil abgewandten Seite der Dämpfungsschicht eine weitere Aluminiumauflage vorzusehen, die die Dämpfungsschicht stabilisiert. Diese Aluminiumauflage bewirkt eine bessere Entdröhnung des Blechs, da das Aluminiumblech und das zu entdröhnende Blechteil mit der dazwischen liegenden Dämpfungsschicht ein "Sandwich" bildet, das eine erheblich reduzierte Neigung zum Schwingen aufweist, aufgrund der unterschiedlichen E-Module der einzelnen Lagen des Sandwichs. Ein entscheidender Nachteil solcher Aluminium-Sandwich-Systeme ist deren Eigenschaft, auf versickten Flächen schlecht anbringbar zu sein. Sie können daher in erster Linie nur auf planen Flächen des Blechteils aufgebracht werden, da Vertiefungen, Sicken oder andere Unebenheiten auf dem Blech kaum umschließend abgedeckt werden können. Des weiteren sind solche Systeme teuer in der Herstellung und bereiten Schwierigkeiten beim Recycling.

Für "unebene" Bleche ist es beispielsweise aus der EP 0 199 372 B1 oder der DE 44 21 012 bekannt, spritzbare Plastisole oder andere Antidröhnmassen als Dämpfungsschicht aufzubringen, die bei Temperaturen von etwa 140°C vernetzen und dadurch ausreichend hart werden. Neben der Verformung von Blechen sowie der Haftung am Blech müssen jedoch weitere Belastungsanforderungen insbesondere der Fahrzeugindustrie erfüllt werden, die die beschichteten Teile neben der Akustikprüfung auch mechanischen Tests unterzieht, wie beispielsweise einem Kälteschlagtest, einer Dornbiegung, einem Alterungstest oder einem Klimawechseltest. Darüber hinaus sollte der Einsatz solcher Antidröhnmassen auch im Rohbau auf geölten Blechen möglich sein und eine "KTL-Verträglichkeit" bestehen.

WO 2005/065939 A1 offenbart eine Schwingungsdämpfungsbahn, die aus drei Schichten besteht, nämlich einer Versteifungsschicht und einer Grundschicht (= Dämpfungsschicht), wobei zwischen beiden Schichten eine Entkoppelungsschicht angeordnet ist. Es wird beschrieben, dass die Grundschicht eine Dicke von 0,5 mm und dass die Versteifungsschicht eine Dicke von 0,4 aufweisen soll. Die Dicke der Versteifungsschicht soll daher nur ein klein wenig geringer sein als die der Grundschicht.

DE 43 24 004 A1 beschreibt einen Entdröhnungsbelag mit einer Schicht eines Schalldämpfungsmaterials, die mittels einer Kleberschicht auf einem zu entdröhnenden Blech appliziert wird. Zwischen der Schicht des Schalldämpfungsmaterials und der Kleberschicht ist eine dünne Trennschicht angeordnet, die mit der Schicht des Schalldämpfungsmaterials und der Kleberschicht verbunden ist. Die Trennschicht kann ein Vlies oder eine Verbundfolie sein.

EP 1 323 523 A2 offenbart einen Dämpfungsbelag zum Entdröhnen von Blechen mit einer Dämpfungsschicht aus einem viskoelastischen Material und einer festen, dehnsteifen Abdeckung, insbesondere aus Aluminium, auf der dem zu entdröhnenden Blech abgewandten Seite der Dämpfungsschicht.

### Aufgabe

Der Erfindung liegt daher die Aufgabe zugrunde, eine Beschichtung zum Entdröhnen von schwingfähigen Bauteilen anzugeben sowie ein entsprechendes Verfahren zur Herstellung einer solchen Beschichtung, die eine gegenüber einfachen Dämpfungsschichten erhöhte Entdröhnwirkung aufweist, gleichzeitig aber eine gute Aufschmelzbarkeit auf dem Blech, d.h. ein gutes Sickenverhalten aufweist. Die Beschichtung soll beim Anbringen auf dem Blech ausreichend "flexibel" sein, um sich den Unebenheiten des Bleches gut anzupassen. Gleichzeitig soll die Beschichtung geringe Kosten verursachen und beim Recycling des Blechteils einfach abzulösen und wieder verwertbar sein.

Schließlich ist es die Aufgabe der Erfindung, eine solche Beschichtung anzugeben, die auch bei niedrigen Temperaturen angewendet werden kann und eine gute Haftung am Blechteil aufweist. Eine Verformung des Blechs beim Aufbringen der Entdröhnbeschichtung, wie beispielsweise durch das Aushärten von Harzen, soll vermieden, gleichzeitig aber eine Versteifungswirkung erzielt werden.

### Erfindung

Die vorliegenden Aufgaben werden durch die kennzeichnenden Merkmale der unabhängigen Patentansprüche 1 und 16 gelöst. Weitere vorteilhafte Ausgestaltungen der Erfindung ergeben sich aus den Unteransprüchen.

Erfindungsgemäß wird eine Entdröhnbeschichtung angegeben, die aus einer auf dem Bauteil aufbringbaren Dämpfungsschicht besteht sowie einer weiteren auf der dem Bauteil abgewandten Seite der Dämpfungsschicht angebrachten Versteifungsschicht, wobei erfindungsgemäß die Versteifungsschicht aus einem formbaren Kunststoff besteht, der eine gegenüber der Dämpfungsschicht größere Steifigkeit aufweist. Mit Vorteil besteht die Dämpfungsschicht dabei aus einem herkömmlichen Kunststoff, insbesondere Bitumen.

Die Versteifungsschicht besteht mit Vorteil aus einem thermoplastischen oder duroplastischen Material, insbesondere einem reaktiven Harz, oder aus einem Bitumen oder einer Kombination aus diesen Materialien, wobei der Bitumen in diesem Fall auf die Steifigkeit des Bitumens der Dämpfungsschicht, sofern dieser dort verwendet wird, abgestimmt wird. Es hat sich nämlich gezeigt, dass mit harten Thermoplasten versetzte Bitumen oder mit thermoplastischen Harzen vermischte Bitumen als Material für die Versteifungsschicht verwendet werden können, die dann Eigenschaften in Richtung eines Aluminiumbleches aufweisen, d.h. wie ein Aluminiumblech, das bisher für Sandwich-Systeme eingesetzt wurde. Auch mit reaktiven Harzen versetzte Bitumen, wie beispielsweise mit Phenolharz versetzte Bitumen, eignen sich als Versteifungsschicht.

Die Versteifungsschicht wird nach einer bevorzugten Ausführungsform der vorliegenden Erfindung mit der Dämpfungsschicht mittels einer Kopplungsschicht verbunden, wobei die Kopplungsschicht eine Heißklebe- oder eine Haftklebeschicht ist. Darüber hinaus kann sich auf der dem Bauteil zugewandten Seite der Entdröhnbeschichtung eine Zwischenschicht befinden, insbesondere eine Heißklebe- und/oder eine Haftklebeschicht, um die Verbindung der Entdröhnbeschichtung mit dem Bauteil zu verbessern und um Relativbewegungen zwischen der Entdröhnbeschichtung und dem Bauteil zu ermöglichen. Diese Relativbewegungen werden dann in der Zwischenschicht aufgenommen, da die Entdröhnbeschichtung, die aus der Versteifungsschicht und der Dämpfungsschicht oder einem Sandwich aus Versteifungsschicht, Kopplungsschicht und Dämpfungsschicht besteht, vom Bauteil akustisch abgekoppelt ist. Durch die Zwischenschicht werden darüber hinaus Scherkräfte vermieden, die zu einem Ablösen der Entdröhnbeschichtung oder eine Blechverformung beim Aushärten der beispielsweise aus reaktiven Harzen bestehenden Dämpfungsschicht führen könnten. Dies gilt auch für die Beschichtung eines schwingfähigen Drahtes oder Rohres.

Die Versteifungsschicht hat erfindungsgemäß eine Steifigkeit, die höher ist als die Steifigkeit der Dämpfungsschicht. Dies dient sowohl zur Stabilisierung und Versteifung des zu entdröhnenden Bauteils als auch zur Generierung eines unterschiedlichen Schubmoduls, wodurch sich Eigenschwingungen im beschichteten Blech reduzieren oder vermeiden lassen. Die Versteifungsschicht hat dabei eine Steifigkeit im Bereich von 300 - 20.000 MPa insbesondere im Bereich von 800 - 15.000 MPa, die Dämpfungsschicht eine Steifigkeit im Bereich von 500 - 2.000 MPa, insbesondere im Bereich von 800 - 1.500 MPa (E-Modul nach ISO 527). Nach einer weiteren Ausführungsform hat die Versteifungsschicht eine Steifigkeit, die in etwa dem 10-fachen der Steifigkeit der Dämpfungsschicht entspricht.

Die Versteifungsschicht besteht nach einer bevorzugten Ausführungsform der vorliegenden Erfindung aus einem thermoplastischen Material, wie PS, PP, PA oder einem Acrylat. Die Dämpfungsschicht besteht mit Vorteil aus einer Bitumenfolie, die ggf. mit einer Haftkleberschicht als Kopplungsschicht mit der Versteifungsschicht verbunden wird. Neben einer Haftkleberschicht kann auch ein Heißkleber verwendet werden. Die als Dämpfungsschicht dienende Bitumenfolie kann als Magnetfolie ausgebildet werden, um das Anbringen am Bauteil zu erleichtern. Darüber hinaus sind auch andere Dämpfungsmaterialien, wie beispielsweise Vinylacetat oder Polystyrol anwendbar. Als Versteifungsschicht dienen darüber hinaus Thermoplaste, die mit thermoplastischen Harzen, wie beispielsweise KW-Harzen, vermischt werden. Auch harte Wachse oder reaktive Harze, wie beispielsweise Phenolharze, Acrylate oder Epoxidharze, können mit den Thermoplasten vermischt werden, um die Steifigkeit der Versteifungsschicht entsprechend einzustellen.

Darüber hinaus sind Bitumenmischungen als Versteifungsschicht anwendbar, die entweder mit harten Thermoplasten, thermoplastischen Harzen oder Wachsen vermischt werden oder mit reaktiven Harzen, wie beispielsweise Phenolharz. Auch reaktive Harze, wie beispielsweise Epoxidharze oder ungesättigte Polyesterharze sind als Versteifungsschicht anwendbar. Alle diese Materialmischungen können darüber hinaus mit Füllstoffen versehen werden, um eine Feinjustierung sowie eine zusätzliche akustische Wirksamkeit der Versteifungsschicht zu erreichen.

Als besonders bevorzugte Ausführungsform der vorliegenden Erfindung kommt als Versteifungsschicht ein thermoplastisches Polystyrol, ggf. mit Füllstoff, zum Einsatz, das optional mit einem thermoplastischen Harz versetzt ist. Diese Versteifungsschicht wird mit einem Haftkleber mit einer als Dämpfungsschicht fungierenden Bitumenfolie verklebt und mit einem Heißkleber auf dem Blech appliziert. Beim Erwärmen des Verbunds Versteifungsschicht-Kleber lässt sich dieser Verbund leicht in Unebenheiten, über Sicken oder Kanten des zu entdröhnenden Blechs aufschmelzen. Für die Zwischenschicht bzw. für die Kopplungsschicht eignen sich Kunststoffmaterialien, die ihre Eigenschaften durch thermisches und/oder chemisches Härten erhalten, insbesondere durch Erstarren, Polyreaktion oder Gelieren. Eine geeignete Zwischenschicht besteht aus Butyl oder EVA.

Das erfindungsgemäße Verfahren zur Herstellung einer Beschichtung zum Entdröhnen von schwingfähigen Bauteilen umfasst insbesondere folgende Schritte: Das Material der aus formbaren Kunststoff bestehenden Versteifungsschicht wird in einem Kneter ggf. mit Füllstoffen oder anderen Zusatzstoffen, wie beispielsweise thermoplastischen Harzen, vermischt und mittels einer Pressschnecke durch eine Breitschlitzdüse einem Kalander zugeführt. Der Kalander erzeugt die folienartige Versteifungsschicht, die zunächst expandiert bzw. entspannt wird, um dann auf einem Stahlband weiteren Verfahrensschritten zugeführt wird.

Auf die Versteifungsschicht wird ggf. eine Kopplungsschicht in Form eines Heißklebers oder Haftklebers aufgetragen, danach wird eine bituminöse Masse oder eine Bitumenfolie auf die Versteifungsschicht oder die Kleberschicht aufgebracht. Anschließend kann optional eine zweite Kleberschicht als Zwischenschicht aufgetragen werden. Anschließend wird die Beschichtung aufgerollt und zu einem späteren Zeitpunkt ausgeschnitten oder gestanzt, um passgerecht auf die entsprechenden Blechteile aufgelegt werden zu können.

### Ausführungsbeispiele

Einige bevorzugte Ausführungsbeispiele der vorliegenden Erfindung werden anhand der beiliegenden Zeichnungen näher erläutert. Dabei zeigen:
- Figur 1: einen erfindungsgemäßen Schichtaufbau mit doppelschichtiger Entdröhnbeschichtung,
- Figur 2: einen erfindungsgemäßen Schichtaufbau mit dreischichtiger Entdröhnbeschichtung, und
- Figur 3: einen erfindungsgemäßen Schichtaufbau nach Figur 2 nach der Applikation auf einem unebenen Blech.

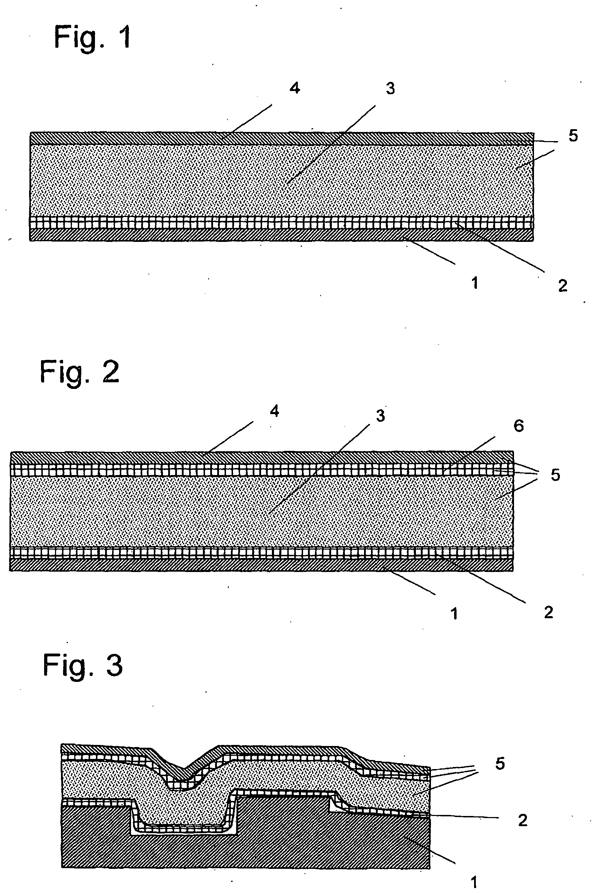

Alle drei Figuren 1 bis 3 zeigen vorteilhafte Ausgestaltungen der Erfindung mit unterschiedlichen Schichtaufbauten. In Figur 1 wird eine Entdröhnbeschichtung 5 gezeigt, die mit dem Bauteil 1 mittels einer Zwischenschicht 2 verbunden ist. Die Entdröhnbeschichtung 5 besteht dabei aus einer Versteifungsschicht 4 und einer Dämpfungsschicht 3. Die Versteifungsschicht 4 befindet sich dabei auf der dem Bauteil 1 abgewandten Seite der Dämpfungsschicht 3.

Figur 2 zeigt einen Aufbau nach Figur 1, wobei die Entdröhnbeschichtung 5 nach einer bevorzugten Ausführungsform der vorliegenden Erfindung zusätzlich aus einer Kopplungsschicht 6 besteht, die sich zwischen der Versteifungsschicht 4 und der Dämpfungsschicht 3 befindet. Diese Kopplungsschicht 6 bewirkt nicht nur eine akustische Entkopplung der Versteifungsschicht 4 von der Dämpfungsschicht 3, sondern auch eine bessere Haftung der zwei Schichten, sofern unterschiedliche Materialien verwendet werden (beispielsweise ein Duroplast, das auf ein Thermoplast aufgetragen wird).

Figur 3 zeigt den Schichtaufbau nach Figur 2 nach der Applikation auf einem unebenen Blech 1. Der Verbund aus Entdröhnbeschichtung 5 und Zwischenschicht 2 wird ausgestanzt bzw. zugeschnitten und plan auf ein Bauteil 1 gelegt. Nach dem Erwärmen des Bauteils 1 "fließt" der Verbund aus Entdröhnbeschichtung 5 und Zwischenschicht 2 in Sickenkanäle und über Nuten des Blechteil 1 und füllt dabei in vorteilhafter Weise diese Unebenheiten aus, ohne dass die versteifende Wirkung der Versteifungsschicht 4 nach dem Aushärten bzw. Erkalten verloren geht. Nach dem Erkalten des Verbunds erhält man nämlich eine vorteilhafte Entdröhnbeschichtung, die ähnlich gute Entdröhneigenschaften wie herkömmliche Aluminium-Sandwich-Systeme aufweisen.

Einige bevorzugte Schichtaufbauten lassen sich der nachfolgenden Tabelle entnehmen:

| **Kunststoffe** | **Sandwichsysteme** | | | | | | | | |
|---|---|---|---|---|---|---|---|---|---|
| | 1 | 2 | 3 | 4 | 5 | 6 | 7 | 8 | 9 |
| **Deckschicht** | | | | | | | | | |
| Thermoplaste (hart) z.B. PS, PP, PA, Acrylate | X | | | | | | | X | X |
| Thermoplaste (hart) mit thermopl. Harzen, z.B. KW Harz (+ Füllstoff) | | X | | | | | | | |
| Thermoplaste (hart) mit harten Wachsen (+ Füllstoff) | | | X | | | | | | |
| Thermoplaste (hart) mit reaktiven Harzen z.B. Phenolharz, Acrylate, Epoxi (+ Füllstoff) | | | | X | | | | | |
| Bitumen mit harten Thermoplasten, thermopl. Harzen, Wachsen (+ Füllstoff) | | | | | X | | | | |
| Bitumen mit reaktiven Harzen z.B. Phenolharz (+ Füllstoff) | | | | | | X | | | |
| Reaktive Harze z.B. Epoxi, Ungesättigte-Polyesterharze (+Füllstoff) | | | | | | | X | | |
| **Kleber Verbundschicht** | | | | | | | | | |
| Hotmelt | | | | | | | | | |
| Haftkleber | X | X | X | X | | | X | | |
| **Basisfolie** | | | | | | | | | |
| Bitumenfolie (Magnetfolie) | X | X | X | X | X | X | X | X | X |
| **Kleber** | | | | | | | | | |
| Hotmelt | X | X | X | X | X | X | X | X | |
| Haftkleber | | | | | | | | | X |
| Hotmelt | | | | | | | | | X |

Besonders bevorzugt ist des weiteren (System 9) eine doppelschichtige Zwischenschicht, die aus einem Haftkleber und einem Heißkleber (Hotmelt) besteht. Die Haftkleberschicht bewirkt dabei eine akustische Verbesserung und eine akustische Trennung der Entdröhnbeschichtung vom Blech, verbessert aber auch die Kälteeigenschaften des Verbunds, da dadurch ein Ablösen der Entdröhnbeschichtung 5 vom Blech 1 bei sehr niedrigen Temperaturen vermieden werden kann.

Die Steifigkeitswerte der bevorzugt verwendeten Materialen ergeben sich aus folgender Tabelle:

| **Kunststoff** | **Zug-E-Modul in MPa DIN 53457** |
|---|---|
| PP | 1.100 - 1.300 |
| PS | 3.200 - 3.250 |
| PMMA | 2.700 - 3.200 |
| PA6 | 1.400 |
| UP | 14.000 - 20.000 |
| Haftkleber/Hotmelt | 20 - 200 |

## Patentansprüche

1. Beschichtung zum Entdröhnen von schwingfähigen Bauteilen wie Blechen, mit einer Entdröhnbeschichtung (5), die mit dem Bauteil (1) verbindbar ist und die aus einer Versteifungsschicht (4) und einer Dämpfungsschicht (3) besteht,
**dadurch gekennzeichnet,**
**dass** die Versteifungsschicht (4) aus einem formbaren Kunststoff besteht und eine gegenüber der Dämpfungsschicht (3) größere Steifigkeit aufweist,
**dass** sich auf der dem Bauteil (1) zugewandten Seite der Entdröhnbeschichtung (5) eine Zwischenschicht (2) befindet, und
**dass** die Entdröhnbeschichtung (5) eine Schichtstärke von etwa 0,5 bis 10 mm und die Zwischenschicht (2) eine Schichtstärke von etwa 0,1 bis 1,2 mm hat, wobei die Versteifungsschicht (4) höchstens ein Drittel der Schichtstärke der Dämpfungsschicht (3) aufweist.

2. Beschichtung nach Anspruch 1,
**dadurch gekennzeichnet,**
**dass** die Dämpfungsschicht (3) aus Kunststoff, insbesondere aus Bitumen besteht.

3. Beschichtung nach Anspruch 1 oder 2,
**dadurch gekennzeichnet,**
**dass** die Versteifungsschicht (4) aus einem thermoplastischen oder duroplastischen Material, insbesondere einem reaktiven Harz, oder Bitumen oder einer Kombination aus diesen Materialien besteht.

4. Beschichtung nach einem der vorhergehenden Ansprüche,
**dadurch gekennzeichnet,**
**dass** sich zwischen der Versteifungsschicht (4) und der Dämpfungsschicht (3) eine Kopplungsschicht (6), insbesondere eine Heißklebe- oder Haftklebeschicht, befindet.

5. Beschichtung nach einem der vorhergehenden Ansprüche,
**dadurch gekennzeichnet,**
**dass** die Zwischenschicht (2) eine Heißklebe- und/oder eine Haftklebeschicht ist.

6. Beschichtung nach einem der vorhergehenden Ansprüche,
**dadurch gekennzeichnet,**
**dass** die Versteifungsschicht (4) eine Steifigkeit im Bereich von 300 - 20.000 MPa, insbesondere im Bereich von 800 - 15.000 MPa, die Dämpfungsschicht (3) eine Steifigkeit im Bereich von 500 - 2.000 MPA, insbesondere im Bereich von 800 - 1.500 MPa aufweist.

7. Beschichtung nach einem der vorhergehenden Ansprüche,
**dadurch gekennzeichnet,**
**dass** die Versteifungsschicht (4) aus einem thermoplastischen Material wie PS, PP, PA oder einem Acrylat besteht,
**dass** die Dämpfungsschicht (3) aus einer Bitumenfolie besteht, und
**dass** die Kopplungsschicht (6) eine Haftkleberschicht ist.

8. Beschichtung nach Anspruch 7,
**dadurch gekennzeichnet,**
**dass** die Versteifungsschicht (4) neben dem thermoplastischen Material Füllstoffe, harte Wachse und/oder thermoplastische oder reaktive Harze aufweist.

9. Beschichtung nach einem der Ansprüche 1 bis 6,
**dadurch gekennzeichnet,**
**dass** die Versteifungsschicht (4) eine Bitumenschicht ist.

10. Beschichtung nach Anspruch 9,
**dadurch gekennzeichnet,**
**dass** die Versteifungsschicht (4) Füllstoffe und/oder hartes thermoplastisches Material und/oder thermoplastische oder reaktive Harze aufweist.

11. Beschichtung nach einem der vorhergehenden Ansprüche,
**dadurch gekennzeichnet,**
**dass** die Dämpfungsschicht (3) eine Bitumenfolie, eine Magnetfolie oder eine Kunststofffolie, insbesondere eine Polystyrol-Vinylacetat-Folie, ist.

12. Beschichtung nach einem der vorhergehenden Ansprüche,
**dadurch gekennzeichnet,**
**dass** die Zwischenschicht (2) eine elastomere Haftvermittlerschicht ist, die aus einer Haftkleberschicht und einer Heißkleberschicht besteht, wobei die Heißkleberschicht dem Bauteil (1) zugewandt ist und die Haftkleberschicht die Entdröhnbeschichtung (5) akustisch vom Bauteil abkoppelt.

13. Beschichtung nach einem der vorhergehenden Ansprüche,
**dadurch gekennzeichnet,**
**dass** die Zwischenschicht (2) und/oder die Kopplungsschicht (6) aus einem Kunststoffmaterial besteht, das seine Eigenschaften durch thermisches und/oder chemisches Härter, insb. durch Erstarren, Polyreaktion oder Gelieren verhält.

14. Beschichtung nach einem der vorhergehenden Ansprüche,
**dadurch gekennzeichnet,**
**dass** die Versteifungsschicht (4) aus einem reaktiven Harz wie Epoxidharz oder einem ungesättigten Polyesterharz und die Dämpfungsschicht (3) aus einer Bitumenfolie besteht und
**dass** die Zwischenschicht (2) aus EVA oder Butyl besteht.

15. Beschichtung nach einem der vorhergehenden Ansprüche,
**dadurch gekennzeichnet,**
**dass** die Entdröhnbeschichtung (5) eine Schichtstärke von 1,0 bis 4,0 mm hat.

16. Verfahren zur Herstellung einer Beschichtung zum Entdröhnen von schwingfähigen Bauteilen wie Blechen, wobei eine aus einem formbaren Kunststoff bestehende Folie als Versteifungsschicht (4) kalandriert und entspannt wird, und eine Dämpfungsschicht (3) sukzessive aufgebracht wird, wobei die aus Kunststoff bestehende Versteifungsschicht (4) eine gegenüber der Dämpfungsschicht (3) größere Steifigkeit aufweist, wobei sich auf dem Bauteil zugewandten Seite der Entdröhnbeschichtung eine Zwischenschicht befindet, und
dass die Entdröhnbeschichtung (5) eine Schichtstärke von etwa 0,5 bis 10 mm und die Zwischenschicht (2) eine Schichtstärke von etwa 0,1 bis 1,2 mm hat, wobei die Versteifungsschicht (4) höchstens ein Drittel der Schichtstärke der Dämpfungsschicht (3) aufweist.

17. Verfahren nach Anspruch 16,
**dadurch gekennzeichnet,**
**dass** auf die Versteifungsschicht (4) eine Kopplungsschicht (6) aufgebracht wird während die Versteifungsschicht (4) über ein Stahlband läuft und eine Zwischenschicht (2) nach Aufbringen der Dämpfungsschicht (3) aufgebracht wird.

18. Verfahren nach Anspruch 16 oder 17,
**dadurch gekennzeichnet,**
**dass** Füllstoffe, Harze oder andere Bestandteile der Versteifungsschicht (4) zusammen mit formbaren dem Kunststoffmaterial der Versteifungsschicht (4) in einem Kneter eingebracht werden und das Kunststoffgemisch mittels einer Pressschnecke erwärmt und durch eine Breitschlitzdüse in den Kalander eingeführt wird.

## Claims

1. A coating for sounddeadening component parts, which are able to vibrate, such as metal sheets, comprising a sounddeadening coating (5), which can be connected to the component part (1) and which consists of a reinforcement layer (4) and a damping layer (3), **characterised in that**
the reinforcement layer (4) consists of a formable plastic and has a rigidity that is greater than that of the damping layer (3),
**in that** an intermediate layer (2) is disposed on the side of the sounddeadening coating (5) facing towards the component part (1), and
**in that** the sounddeadening coating (5) has a layer thickness of approximately 0.5 to 10 mm and the intermediate layer (2) has a layer thickness of approximately 0.1 to 1.2 mm, wherein the reinforcement layer (4) has at most a third of the layer thickness of the damping layer (3).

2. The coating according to claim 1,
**characterised in that**
the damping layer (3) consists of plastic, in particular of bitumen.

3. The coating according to claim 1 or 2,
**characterised in that**
the reinforcement layer (4) consists of a thermoplastic or thermoset material, in particular a reactive resin, or bitumen or a combination of these materials.

4. The coating according to any one of the preceding claims,
**characterised in that**
a coupling layer (6), in particular a hot-press adhesive layer or pressure-sensitive adhesive layer, is disposed between the reinforcement layer (4) and the damping layer (3).

5. The coating according to any one of the preceding claims,
**characterised in that**
the intermediate layer (2) is a hot-press adhesive layer and/or a pressure-sensitive adhesive layer.

6. The coating according to any one of the preceding claims,
**characterised in that**
the reinforcement layer (4) has a rigidity in the range of from 300-20,000 MPa, in particular in the range of from 800-15,000 MPa, and the damping layer (3) has a rigidity in the range of from 500-2,000 MPa, in particular in the range of from 800-1,500 MPa.

7. The coating according to any one of the preceding claims,
**characterised in that**
the reinforcement layer (4) consists of a thermoplastic material, such as PS, PP, PA or an acrylate,
**in that** the damping layer (3) consists of a bitumen film, and
**in that** the coupling layer (6) is a pressure-sensitive adhesive layer.

8. The coating according to claim 7,
**characterised in that**
the reinforcement layer (4), besides the thermoplastic material fillers, also comprises hard waxes and/or thermoplastic or reactive resins.

9. The coating according to any one of claims 1 to 6,
**characterised in that**
the reinforcement layer (4) is a bitumen layer.

10. The coating according to claim 9,
**characterised in that**
the reinforcement layer (4) comprises fillers and/or hard thermoplastic material and/or thermoplastic or reactive resins.

11. The coating according to any one of the preceding claims,
**characterised in that**
the damping layer (3) is a bitumen film, a magnetic film, or a plastics film, in particular a polystyrenevinyl acetate film.

12. The coating according to any one of the preceding claims,
**characterised in that**
the intermediate layer (2) is an elastomer adhesionpromoting layer, which consists of a pressure-sensitive adhesive layer and a hot-press adhesive layer, wherein the hot-press adhesive layer faces towards the component part (1) and the pressure-sensitive adhesive acoustically decouples the sounddeadening coating (5) from the component part.

13. The coating according to any one of the preceding claims,
**characterised in that**
the intermediate layer (2) and/or the coupling layer (6) consists of a plastics material which gains its properties by thermal and/or chemical hardening, in particular by solidification, polyreaction or gelling.

14. The coating according to any one of the preceding claims,
**characterised in that**
the reinforcement layer (4) consists of a reactive resin, such as epoxy resin, or an unsaturated polyester resin, and the damping layer (3) consists of a bitumen film, and **in that** the intermediate layer (2) consists of EVA or butyl.

15. The coating according to any one of the preceding claims,
**characterised in that**
the sounddeadening layer (5) has a layer thickness of from 1.0 to 4.0 mm.

16. A method for producing a coating for sounddeadening component parts, which are able to vibrate, such as metal sheets, wherein a film consisting of a formable plastic is calendered and stress-relieved as reinforcement layer (4), and a damping layer (3) is applied successively, wherein the reinforcement layer (4) consisting of plastic has a rigidity that is greater than that of the damping layer (3), wherein an intermediate layer is disposed on the side of the sounddeadening coating facing towards the component part, and
in that the sounddeadening coating (5) has a layer thickness of approximately 0.5 to 10 mm and the intermediate layer (2) has a layer thickness of approximately 0.1 to 1.2 mm, wherein the reinforcement layer (4) at most has a third of the layer thickness of the damping layer (3).

17. The method according to claim 16,
**characterised in that**
a coupling layer (6) is applied to the reinforcement layer (4) whilst the reinforcement layer (4) runs over a steel belt, and an intermediate layer (2) is applied after application of the damping layer (3).

18. The method according to claim 16 or 17,
**characterised in that**
fillers, resins or other constituents of the reinforcement layer (4) together with the formable plastics material of the reinforcement layer (4) are introduced in a kneader and the plastics mixture is heated by means of a screw press and is introduced through a sheet die into the calender.

## Revendications

1. Revêtement pour invrombir des composants pouvant osciller comme des tôles, avec un revêtement d'invrombissement (5), qui peut être relié au composant (1) et qui est composé d'une couche de renforcement (4) et d'une couche d'amortissement (3), **caractérisé en ce que** la couche de renforcement (4) est composée de matière plastique déformable et comporte une rigidité plus grande par rapport à la couche d'amortissement (3), **en ce qu'**une couche intermédiaire (2) se trouve sur le côté tourné vers le composant (1) de la couche d'invrombissement (5), et **en ce que** la couche d'invrombissement (5) possède une épaisseur de couche d'environ 0,5 à 10 mm et la couche intermédiaire (2) une épaisseur de couche d'environ 0,1 à 1,2 mm, la couche de renforcement (4) comportant au maximum un tiers de l'épaisseur de couche de la couche d'amortissement (3).

2. Revêtement selon la revendication 1, **caractérisé en ce que** la couche d'amortissement (3) est en matière synthétique, notamment en bitume.

3. Revêtement selon la revendication 1 ou 2, **caractérisé en ce que** la couche de renforcement (4) est composée d'un matériau thermoplastique ou thermodurcissable, notamment une résine réactive, ou bitume ou d'une combinaison de ces matériaux.

4. Revêtement selon l'une quelconque des revendications précédentes, **caractérisé en ce qu'**une couche d'accouplement (6), notamment une couche thermoadhésive ou autoadhésive, se trouve entre la couche de renforcement (4) et la couche d'amortissement (3).

5. Revêtement selon l'une quelconque des revendications précédentes, **caractérisé en ce que** la couche intermédiaire (2) est une couche thermoadhésive et/ou autoadhésive.

6. Revêtement selon l'une quelconque des revendications précédentes, **caractérisé en ce que** la couche de renforcement (4) comporte une rigidité de l'ordre de 300 - 20 000 MPa, notamment de l'ordre de 800 - 15 000 Mpa, la couche d'amortissement (3) une rigidité de l'ordre de 500 - 2 000 MPa, notamment de l'ordre de 800 - 1 500 MPa.

7. Revêtement selon l'une quelconque des revendications précédentes, **caractérisé en ce que** la couche de renforcement (4) est composée d'un matériau thermoplastique comme le polystyrène (PS), le polypropylène (PP), le polyamide (PA) ou un acrylate, **en ce que** la couche d'amortissement (3) est composée d'une feuille de bitume et **en ce que** la couche d'accouplement (6) est une couche autoadhésive.

8. Revêtement selon la revendication 7, **caractérisé en ce que** la couche de renforcement (4) comporte en plus du matériau thermoplastique, des matières de remplissage, des cires dures et/ou des résines thermoplastiques ou réactives.

9. Revêtement selon l'une quelconque des revendications 1 à 6, **caractérisé en ce que** la couche de renforcement (4) est une couche de bitume.

10. Revêtement selon la revendication 9, **caractérisé en ce que** la couche de renforcement (4) comporte des matières de remplissage et/ou un matériau thermoplastique dur et/ou des résines thermoplastiques ou réactives.

11. Revêtement selon l'une quelconque des revendications précédentes, **caractérisé en ce que** la couche d'amortissement (3) est une feuille de bitume, une feuille magnétique ou une feuille de plastique, notamment une feuille de polystyrène-acétate de vinyle.

12. Revêtement selon l'une quelconque des revendications précédentes, **caractérisé en ce que** la couche intermédiaire (2) est une couche d'agent adhésif élastomère, qui est composée d'une couche autoadhésive et une couche thermoadhésive, la couche thermoadhésive étant dirigée vers le composant (1) et la couche autoadhésive désaccouplant acoustiquement la couche d'invrombissement (5) du composant.

13. Revêtement selon l'une quelconque des revendications précédentes, **caractérisé en ce que** la couche intermédiaire (2) et/ou la couche d'accouplement (6) est composée d'un matériau plastique qui reçoit ses propriétés par durcissements thermiques et/ou chimiques, en particulier par solidification, polyréaction ou gélification.

14. Revêtement selon l'une quelconque des revendications précédentes, **caractérisé en ce que** la couche de renforcement (4) est composée d'une résine réactive comme la résine époxyde ou une résine polyester non-saturée et la couche d'amortissement (3) d'une feuille de bitume et **en ce que** la couche intermédiaire (2) est composée d'éthylène-acétate de vinyle (EVA) ou de butyle.

15. Revêtement selon l'une quelconque des revendications précédentes, **caractérisé en ce que** la couche d'invrombissement (5) possède une épaisseur de couche de 1,0 à 4,0 mm.

16. Procédé pour la fabrication d'un revêtement pour l'invrombissement de composants pouvant osciller comme des tôles, une feuille composée de matière plastique déformable étant calandrée et détendue en tant que couche de renforcement (4) et une couche d'amortissement (3) étant appliquée successivement, la couche de renforcement (4) composée de plastique comportant une rigidité plus grande par rapport à la couche d'amortissement (3), une couche intermédiaire se trouvant sur le côté de la couche d'invrombissement tournée vers le composant et en ce que la couche d'invrombissement (5) possède une épaisseur de couche d'environ 0,5 à 10 mm et la couche intermédiaire (2) une épaisseur de couche d'environ 0,1 à 1,2 mm, la couche de renforcement (4) comportant au maximum un tiers de l'épaisseur de couche de la couche d'amortissement (3).

17. Revêtement selon la revendication 16, **caractérisé en ce qu'**une couche d'accouplement (6) est appliquée sur la couche de renforcement (4) alors que la couche de renforcement (4) passe sur une bande d'acier et une couche intermédiaire (2) est appliquée après application de la couche d'amortissement (3).

18. Revêtement selon la revendication 16 ou 17, **caractérisé en ce que** des matières de remplissage, des résines ou d'autres composants de la couche de renforcement (4) sont incorporés dans un malaxeur avec le matériau plastique déformable de la couche de renforcement (4) et le mélange de matière plastique est chauffé au moyen d'une vis d'extrusion et est introduit dans la calandre par une filière plate.
